(19)

Europäisches
Patentamt
European
Patent Office
Office européen
des brevets

(11)     **EP 2 784 438 B1**

(12)     **EUROPEAN PATENT SPECIFICATION**

(45) Date of publication and mention
of the grant of the patent:
**24.10.2018  Bulletin 2018/43**

(51) Int Cl.:
*G01B 9/02* *(2006.01)*     *A61B 3/107* *(2006.01)*

(21) Application number: **14150879.6**

(22) Date of filing: **13.01.2014**

(54) **Method for generating two-dimensional images from three-dimensional optical coherence tomography interferogram data**

Verfahren zur Erzeugung von zweidimensionalen Bildern aus dreidimensionalen optischen Kohärenztomographie-Interferogrammdaten

Procédé pour produire des images bidimensionnelles à partir des données d'interférogramme à tomographie par cohérence optique tridimensionnelle

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2013  US 201313851612**

(43) Date of publication of application:
**01.10.2014  Bulletin 2014/40**

(73) Proprietor: **Kabushiki Kaisha TOPCON Tokyo (JP)**

(72) Inventor: **Reisman, Charles A.
Mamaroneck, NY, 10543 (US)**

(74) Representative: **Kuhnen & Wacker Patent- und Rechtsanwaltsbüro PartG mbB Prinz-Ludwig-Straße 40A 85354 Freising (DE)**

(56) References cited:
**US-A1- 2008 100 612     US-A1- 2011 032 479
US-B2- 8 319 974**

• **BIEDERMANN B R ET AL: "Real time en face Fourier-domain optical coherence tomography with direct hardware frequency demodulation", OPTICS LETTERS, OPTICAL SOCIETY OF AMERICA, US, vol. 33, no. 21, 1 November 2008 (2008-11-01), pages 2556-2558, XP001519571, ISSN: 0146-9592, DOI: 10.1364/OL.33.002556**

## Description

### TECHNICAL FIELD

The present disclosure is generally directed to coherent waveform based imaging, and more specifically to an optical coherence tomography imaging system.

### BACKGROUND

From US 8 319 974 B2 there is known a system, method and apparatus for anatomical mapping utilizing optical coherence tomography. In the present invention, 3-dimensional fundus intensity imagery can be acquired from a scanning of light back-reflected from an eye. The scanning can include spectral domain scanning, as an example. A fundus intensity image can be acquired in real-time. The 3-dimensional data set can be reduced to generate an anatomical mapping, such as an edema mapping and a thickness mapping. Optionally, a partial fundus intensity image can be produced from the scanning of the eye to generate an en face view of the retinal structure of the eye without first requiring a full segmentation of the 3-D data set.; Advantageously, the system, method and apparatus of the present invention can provide quantitative three-dimensional information about the spatial location and extent of macular edema and other pathologies. This three-dimensional information can be used to determine the need for treatment, monitor the effectiveness of treatment and identify the return of fluid that may signal the need for re-treatment.

Optical coherence tomography (OCT) is an optical signal acquisition and processing method. OCT is an interference-based technique that can be used to penetrate beyond a surface of an observed light-scattering object (e.g., biological tissue) so that sub-surface images can be obtained.

OCT systems can provide cross-sectional images or collections of cross-sectional images (e.g., three-dimensional images) that are of sufficient resolution for diagnosing and monitoring certain medical conditions. Traditionally, OCT systems operate by providing measurements of an echo time delay from backscattered and back-reflected light received from an observed object. Such OCT systems typically include an interferometer and a mechanically scanned optical reference path, and they are commonly called time-domain OCT.

Spectral domain or swept-source based Fourier Domain OCT systems operate by providing measurements of an echo time delay of light from the spectrum of interference between light measured from an observed object and light from a fixed reference path. Spectral domain OCT systems typically include a spectrometer consisting of an optical dispersive component and a detector array, such as a charge coupled device (CCD) camera, to measure the interference spectrum received from the observed object. Meanwhile, swept source systems typically include a fast wavelength tuning laser and a detector and high-speed data acquisition device to measure the interference spectrum. In both types of systems, the echo time delay of backscattered and back-reflected light from the observed object is determined by calculating a Fourier-transform of the interference spectrum.

Fourier Domain OCT systems are an improvement over time domain OCT systems because the backscattered and back-reflected light at different axial positions of the observed object can be measured simultaneously, rather than sequentially. As such, imaging speed and sensitivity for diagnosing and monitoring certain medical conditions have been improved. However, further improvements in measurement techniques using Fourier Domain OCT data would be beneficial for providing more efficient and accurate medical diagnoses, monitoring and other capabilities.

Furthermore, ophthalmic OCT systems typically utilize a secondary imaging modality, such as scanning laser ophthalmoscope or infrared fundus camera, to image the fundus of the eye for general diagnostic purposes and to support OCT scan alignment by creating an en face fundus view. However, there exist imaging conditions in a subject or patient, such as small pupil size or ocular opacities, for which not all secondary imaging modalities work effectively, even though the ophthalmic OCT systems can produce acceptable images.

### SUMMARY

Therefore, it is desirable to create methods to utilize OCT scan data to produce a displayed en face fundus image so as to replace or substitute for the secondary imaging modality. A displayed en face fundus image provides the ability for a clinician to more reliably scan an intended location, and also provides an inherently co-registered map of OCT scan data that can be used both to register to other data sets or imaging modalities and to enable feature segmentation computations.

The object of the invention is attained by an apparatus for obtaining intensity maps from optical coherence tomography interferogram data according to claim 1 and by a method for obtaining intensity maps from optical coherence tomography interferogram data according to claim 11. Further developments of the invention are specified in the dependent claims.

These and other advantages of the invention will be apparent to those of ordinary skill in the art by reference to the following detailed description and the accompanying drawings.

## BRIEF DESCRIPTION OF THE DRAWINGS

Fig. 1 illustrates a diagram of a system that may be used for generating two-dimensional images from three-dimensional OCT interferogram data in accordance with an embodiment;

Fig. 2 illustrates a diagram of functional steps for generating two-dimensional images from three-dimensional OCT interferogram data in accordance with an embodiment;

Fig. 3 illustrates a workflow diagram for processing OCT interferogram data in accordance with an embodiment;

Fig. 4 illustrates a flowchart diagram for generating two-dimensional images from three-dimensional OCT interferogram data in accordance with an embodiment;

Fig. 5 illustrates a flowchart diagram for an imaging session in which the two-dimensional image intensity map is utilized in accordance with an embodiment; and

Fig. 6 is a high-level block diagram of an exemplary computer that may be used for generating two-dimensional images from three-dimensional OCT interferogram data.

## DETAILED DESCRIPTION

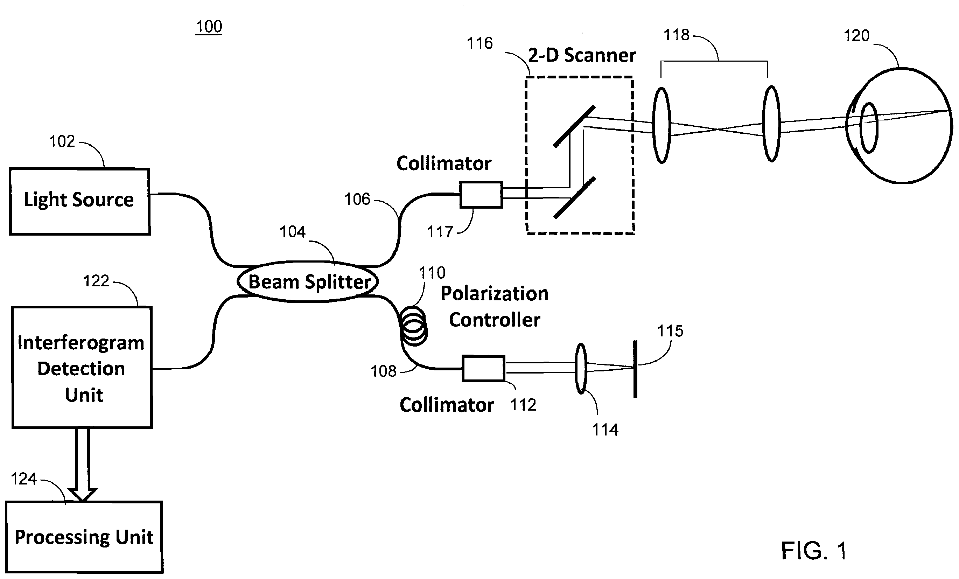

In accordance with the various embodiments, Fourier domain (e.g., spectrometer or swept-source based) optical tomography convergence (OCT) data is received as input at an OCT imaging system and a two-dimensional image intensity map is generated from the interferogram data based on an inverse cumulative distribution function. Fig. 1 illustrates a diagram of a system that is used for generating two-dimensional images from three-dimensional OCT interferogram data in accordance with an embodiment. In Fig. 1, system 100 includes a light source 102 (e.g., a broadband light source) for generating a beam of light. Beam splitter 104 divides the beam of light from light source 102 along sample path 106 and reference path 108. Reference path 108 may include polarization controller 110 for tuning the reference beam of light from light source 102 (e.g., for achieving maximal interference) and collimator 112 for collimating the reference beam of light directed through lens 114 to a reflective mirror 115, which may be spatially adjustable.

Sample path 106 includes two-dimensional scanner 116 for directing the beam of light from light source 102, via collimator 117 and one or more objective lenses 118, to illuminate different locations in an X-Y plane over object 120. In an embodiment, object 120 may be a patient's eye (as shown) and system 100 may be generally directed toward obtaining ophthalmic images. However, as the various embodiments herein apply to a variety of fields, including (but not limited to) epidermal, dental and vasculature clinical imaging, object 120 may comprise any of a variety of clinical (e.g., human tissue, teeth, etc.) or non-clinical areas of interest. As such, while some examples herein may refer to fundus imaging and to object 120 as being a patient's eye, system 100 should not be construed as being limited to ophthalmic applications. Rather, the various embodiments may be related to a variety of applications, as the techniques described herein can be widely applied.

As a result of the beam of light being directed by scanner 116 to a particular X-Y plane location over object 120, interferogram detection unit 122 receives light returned from sample path 106. Interferogram detection unit 122 also receives light returned from reference path 108 to measure echo time delay of light from the spectrum of interference between light measured from object 120 and from reference path 108. In one embodiment, light source 102 may generate a broadband beam of light and interferogram detection unit 122 may be a spectrometer including a detector array and a diffraction grating for angularly dispersing light returned from sample path 106 and light returned from reference path 108 as a function of wavelength. Alternatively, light source 102 may generate a tunable and swept beam of light, and light intensity at different wavelengths of the light source may be obtained by interferogram detection unit 122 as a function of time.

In one embodiment, interferogram detection unit 122 generates a plurality of sets of outputs based on the light received (i.e., interferogram data) from sample path 106 and reference path 108. Each of the plurality of sets of outputs generated by interferogram detection unit 122 corresponds to light intensities received at different wavelengths of light source 102. As such, when the beam of light from light source 102 is directed by scanner 116 at a particular X-Y plane location, the detected light intensities include information regarding light reflectance distribution within object 120 in a depth direction Z at the particular X-Y plane location. Therefore each set of outputs comprises a three-dimensional data set.

Processing unit 124 receives the plurality of sets of outputs generated by interferogram detection unit 122 via any of a variety of communication means, such as through a computer bus or wirelessly or via a public or private network (e.g., via the internet or a restricted access intranet network). In one embodiment, processing unit 124 may comprise multiple processing units that, for example, may be located remotely from each other.

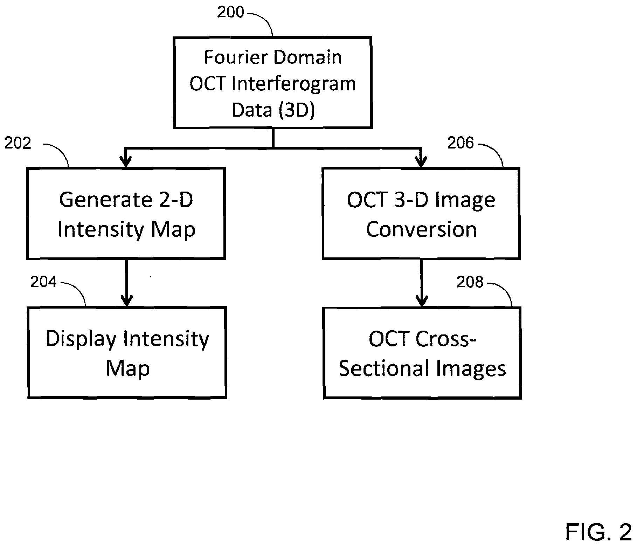

Fig. 2 illustrates a diagram of functional steps for generating two-dimensional images from three-dimensional OCT interferogram data in accordance with an embodiment. Using OCT interferogram data 200 (i.e. the plurality of three-dimensional sets of outputs generated by interferogram detection unit 122), computer program instructions are executed at processing unit 124 for generating 202 and displaying 204 two-dimensional intensity map OCT images, such as fundus maps for medical diagnoses. In all embodiments of the invention, the generated images are two-dimensional image intensity maps of object 120, or a segmented or transformed result thereof, such as for displaying, registering and segmenting a generated image. The generated images may be suitable for implementing a scan capture alignment process associated with an imaging modality such as an OCT or fundus imaging camera. In addition, computer program instructions may be executed to convert OCT interferogram data 206 for generating three-dimensional cross-sectional images 208.

A Fourier-transform calculation can be utilized to generate the plurality of sets of filtered outputs. A general Fourier domain OCT interferogram equation is given by the expression:

$$G_d(v) = G_s(v)\left\{1 + \sum_n R_n + 2\sum_{n \neq m} \sqrt{R_n R_m}\cos[2\pi v(\tau_n - \tau_m)] + 2\sum_n \sqrt{R_n}\cos[2\pi v(\tau_n - \tau_r)]\right\}$$

wherein $v$ is the frequency of the beam of light; $R_n$ and $R_m$ are the intensity reflections at particular X-Y plane locations $n$ and $m$, respectively, from object 120; $G_s(v)$ is the spectral density of light source 102; the reflection of the reference arm is unity; and distances are represented by propagation times $\tau_n$ and $\tau_m$ in sample path 106 and $\tau_r$ in reference path 108. The third term in brackets is the mutual interference for all light scattered within object 120 and the last term contains the interference between the scattered light from object 120 and reference path 108, from which an A-scan (i.e., axial length scan) is calculated.

In embodiments where interferogram detection unit 122 is a spectrometer, the parameter v also represents a position on a line scan camera. As such, the first two terms represent slow variation across a linear array of camera pixels while the last two terms represent oscillations (i.e., interference fringes). Similarly, in embodiments where light source 102 is a tunable, swept-source and is swept through a range of frequencies $v$, the first two terms in the primary equation represent slow variation in time of the detected signal, while the last two terms represent oscillations.

In an embodiment, high-pass filtering will eliminate all but the third and fourth terms on the right side of the equation and, given that the magnitude of the fourth term is typically much larger than the third when an object with low reflectivity is present along sample path 106, will effectively isolate the fourth term.

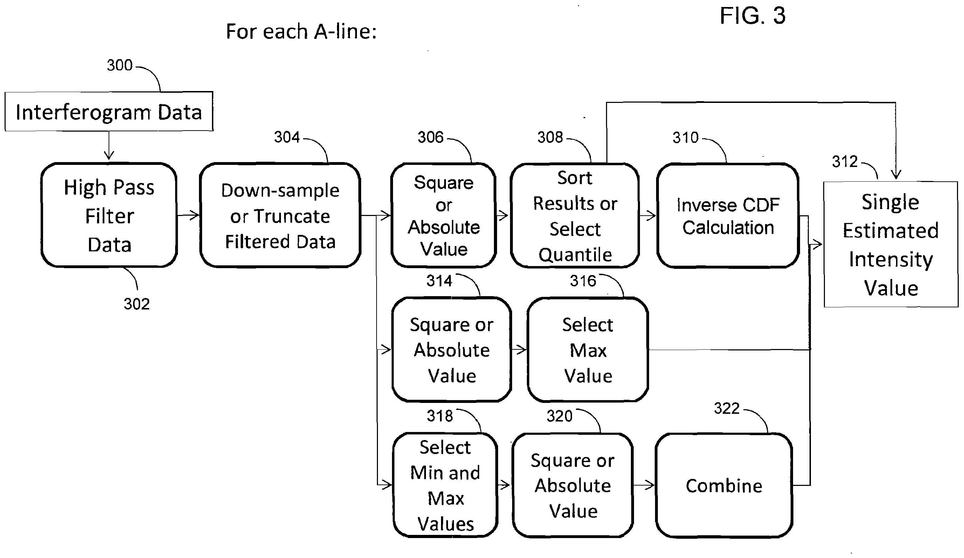

Fig. 3 illustrates a workflow diagram for processing OCT interferogram data in accordance with an embodiment. The methodology illustrated in Fig. 3 includes estimating and quantifying a distribution of high-pass filtered interferogram data to determine a plurality of single estimated intensity values corresponding to a plurality of different X-Y plane locations over object 120. Interferogram data (i.e. a plurality of sets of outputs) is received from interferogram detection unit 122 at 300. The interferogram data are high-pass filtered at 302 to simplify the terms of the Fourier domain interferogram equation by effectively isolating the fourth term as described above. In some embodiments, the data rate or size of the high-pass filtered interferogram data may be further reduced through various known down-sampling or truncation techniques at 304 to, for example, allow for greater processing efficiency or faster calculations. Alternatively, the data may be truncated or down-sampled prior to the high-pass filtering of the interferogram data. For example, the interferogram data (either before of after) high-pass filtering may be down-sampled by retaining every nth output and discarding all others. In another example, the interferogram data may be truncated by retaining data within a selected range while discarding all other data. Alternatively, a pseudorandom down-sampling process may be employed in which one sample is randomly or pseudo-randomly selected from every $n$ samples.

Each set of filtered outputs is then be translated into a single estimated intensity value in the depth direction Z for the particular X-Y plane location based on an inverse cumulative distribution function (CDF). In general, a CDF function describes the probability that a real-valued random variable $x$ with a given probability distribution will be found at a value less than or equal to $x$. The inverse CDF, also known as a quantile function, of a random variable specifies, for a given probability, the value which the variable will be at or below, with that probability.

In some embodiments the inverse CDF may be a quick-select or Hoare's selection function, wherein it is generally not necessary to sort the entire set of filtered outputs. Rather, only a portion of the set of filtered outputs, e.g., sub-arrays around pivot values that include a desired quantile selection, is actually sorted.

In alternative embodiments the inverse CDF or quantile function may employ a set of heuristics operable to estimate a quantile value without having to sort the set of filtered outputs.

According to a first inverse CDF approach, the set of filtered outputs are squared at 306 (i.e., for positive and negative values to exist in the same realm) and sorted at 308 for an inverse CDF function at 310. In an embodiment, the set of filtered outputs is sorted in either ascending or descending order at 308 to determine a value corresponding to an arbitrary percentile that is selected for the inverse CDF calculation. For example, a 0th percentile may correspond to a minimum percentile value and minimum filtered output value, a 50th percentile may correspond to a median percentile value and median filtered output value, and a 100th percentile may correspond to a maximum percentile value and maximum filtered output value. Therefore, if there are 2048 filtered outputs and a 90th percentile is selected, the 1843rd sorted value is the selected value. In an exemplary embodiment, the at least one selected percentile value may correspond to a value between a $50^{th}$ and a $100^{th}$ percentile value. However, the at least one selected percentile value may correspond to any pre-selected percentile value within the set of filtered outputs. As such, once a sorted value corresponding to an arbitrary percentile is selected, the sorted value may be translated into the single estimated intensity value at 312.

In a variation of the first inverse CDF approach, a set of heuristics may be employed at 308 that are operable to estimate a quantile value without having to sort the set of filtered outputs. The estimated value then may be translated into the single estimated intensity value at 312.

According to the claimed invention determining the single estimated intensity value involves calculation of the inverse CDF. In Fig. 3 reference signs 314, 316, 318, 320 and 322 refer to alternative methods for determining the single estimated intensity value that do as such not fall under the scope of the claims. In these alternative methods, maximum and minimum based approaches that are conceptually similar to the inverse CDF approach may be employed to determine a single estimated intensity value. In maximum and minimum based approaches, the set of filtered outputs do not need to be sorted to generate single estimated intensity values. For example, a maximum percentile based approach generally corresponds to the inverse CDF approach when a 100th percentile is selected. In one embodiment, the square or the absolute value of the filtered outputs may be determined at 314 to eliminate the possibility of negative values, and a maximum ($100^{th}$) percentile value determined from these results at 316 may represent a single estimated intensity value 312. In a maximum and minimum based approach, the maximum and minimum percentile values are determined at 318, and the square or the absolute value of the maximum and minimum percentile values may be determined to eliminate the possibility of negative values at 320. The resulting values then may be combined at 322 to determine a single estimated intensity value 312. For example, combination operations may include taking the minimum, maximum, or average of the two resulting values. Moreover, the scale of the single estimated intensity value 312 may be further translated by, for example, taking the logarithm or a root (e.g., square, cubic, fourth) of the generated value. Furthermore, a minimum and maximum based approach may be generalized such that the top n minimum and top n maximum values are determined in block 318. In this generalized embodiment, the combination operation of 322 could consist of taking an average of the 2n values or taking a pre-selected percentile value using the inverse CDF methodology. A plurality of the single estimated intensity values corresponding to a plurality of different X-Y plane locations (i.e., multiple A-lines) is used for generating a two-dimensional image intensity map of object 120.

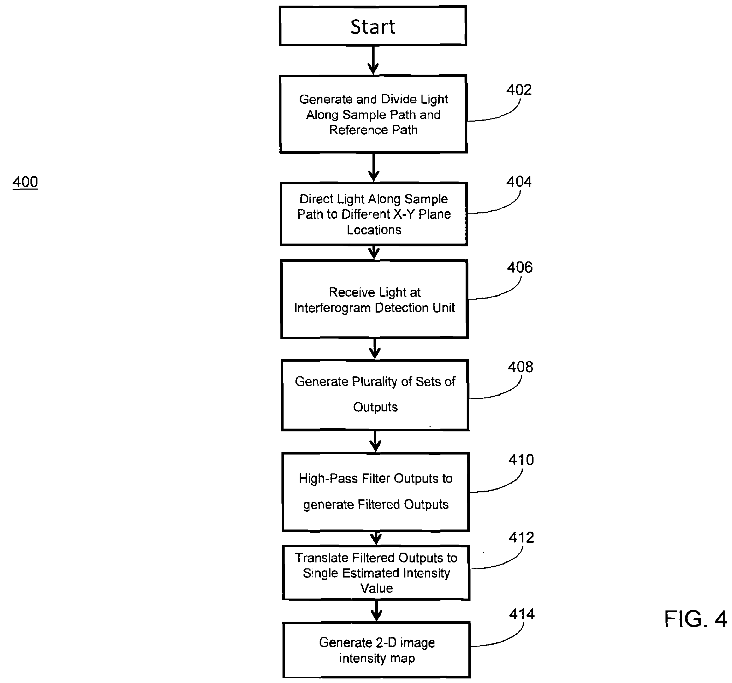

Fig. 4 illustrates a flowchart diagram for generating two-dimensional images from three-dimensional OCT interferogram data in accordance with an embodiment. Using the system of Fig. 1 as an example, at 402 a beam of light from light source 102 is generated and divided along sample path 106 and reference path 108. For example, light source 102 may generate a broadband beam of light and interferogram detection unit 122 may be a spectrometer including a grating and a detector array. Alternatively, light source 102 may generate a tunable and swept beam of light, and light intensity at different wavelengths of the light source may be obtained by interferogram detection unit 122 as a function of time.

At 404, the beam of light is directed along sample path 106 by scanner 116 to different locations in an X-Y plane over object 120. At 406, light returned from each of sample path 106 and reference path 108 is received at interferogram detection unit 122. Interferogram detection unit 122 generates a plurality of sets of outputs at 408, each of the plurality of sets of outputs corresponding to light intensities received at different wavelengths of the light source when the beam of light is directed at a particular X-Y plane location. The light intensities include information about a light reflectance distribution within object 120 in a depth direction Z at the particular X-Y plane location.

At 410, a set of outputs generated from directing the beam of light at a particular X-Y plane location is high-pass filtered to generate a set of filtered outputs. At 412, the set of filtered is translated into a single estimated intensity value in the depth direction Z for the particular X-Y plane location based on an inverse cumulative distribution function, such as described in relation to Fig. 3 above. At 414, a two-dimensional image intensity map of the object is generated from a plurality of single estimated intensity values corresponding to a plurality of different X-Y plane locations. The two-dimensional image intensity map is suitable for presentation at a display. In one embodiment, the single estimated intensity values are translated for a real-time display of the image intensity map.

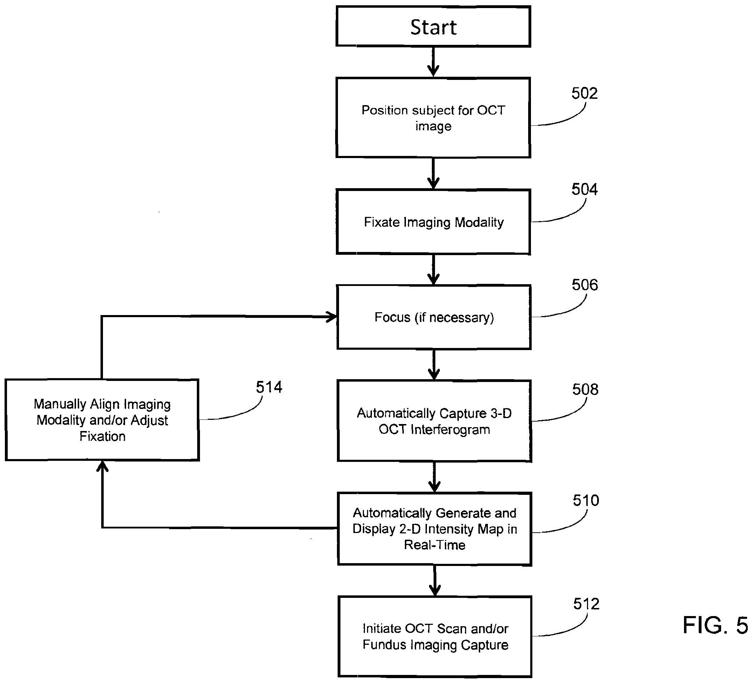

Fig. 5 illustrates a flowchart diagram for an imaging session in which the two-dimensional image intensity map is utilized in accordance with an embodiment. The two-dimensional image intensity map of object 120 may be used for a scan capture alignment process associated with an imaging modality. For example, the imaging modality may be one of OCT or another system (e.g., a fundus imaging camera for ophthalmology purposes). Further, the scan capture alignment process may be performed automatically or the imaging modality may be manually aligned, such as by a technician. At 502, a subject (e.g., a patient) is positioned for an OCT (e.g., fundus) image, and the imaging modality is fixated (e.g., an imaging modality chassis is fixedly set at a particular position) at 504. At 506, the imaging modality is focused, if necessary.

As described in Fig. 4 above, a 3-D OCT interferogram may be captured at 508, and a 2-D intensity map may be automatically generated and displayed in real-time at 510. In one embodiment, an OCT image of object 120 may be generated by any of a variety of methods comprising calculation of an inverse cumulative distribution function. An OCT scan or fundus image capture is initiated at 512. In one embodiment, the imaging modality is manually aligned and the fixation is adjusted at 514 prior to re-focusing the imaging modality (e.g., if necessary for capturing another image) at 506.

In various embodiments, the scan capture alignment process can serve to enable successful imaging sessions, even in non-mydriatic conditions. The two-dimensional image intensity map of object 120 also may be used to register an image of object 120 obtained via another imaging modality.

In addition, the set of (unfiltered) outputs may be translated into a three-dimensional data set with depth direction Z intensity information for the particular X-Y plane location, wherein one or more three-dimensional data sets are used for generating an OCT cross-sectional image of object 120. For example, the three-dimensional data set may be segmented based on one or more landmarks, e.g., one or more physical boundaries of object 120, which may be identified from the depth direction Z intensity information. In various embodiments, the segmented three-dimensional data set may be utilized to generate a partial intensity image or an ocular map of object 120, or quantify fluid-filled spaces of object 120.

In yet another embodiment, the two-dimensional intensity map of object 120 also may be used to register the OCT cross-sectional images of object 120, for example, by displaying the two-dimensional intensity map of object 120 in parallel with an OCT cross-sectional image of object 120.

Systems, apparatus, and methods described herein may be implemented using digital circuitry, or using one or more computers using well-known computer processors, memory units, storage devices, computer software, and other components. Typically, a computer includes a processor for executing instructions and one or more memories for storing instructions and data. A computer may also include, or be coupled to, one or more mass storage devices, such as one or more magnetic disks, internal hard disks and removable disks, magneto-optical disks, optical disks, etc.

Systems, apparatus, and methods described herein may be implemented using computers operating in a client-server relationship. Typically, in such a system, the client computers are located remotely from the server computer and interact via a network. The client-server relationship may be defined and controlled by computer programs running on the respective client and server computers.

Systems, apparatus, and methods described herein may be used within a network-based cloud computing system. In such a network-based cloud computing system, a server or another processor that is connected to a network communicates with one or more client computers via a network. A client computer may communicate with the server via a network browser application residing and operating on the client computer, for example. A client computer may store data on the server and access the data via the network. A client computer may transmit requests for data, or requests for online services, to the server via the network. The server may perform requested services and provide data to the client computer(s). The server may also transmit data adapted to cause a client computer to perform a specified function, e.g., to perform a calculation, to display specified data on a screen, etc. For example, the server may transmit a request adapted to cause a client computer to perform one or more of the method steps described herein, including one or more of the steps of Figs. 4 & 5. Certain steps of the methods described herein, including one or more of the steps of Figs. 4 & 5, may be performed by a server or by another processor in a network-based cloud-computing system. Certain steps of the methods described herein, including one or more of the steps of Figs. 4 & 5, may be performed by a client computer in a network-based cloud computing system. The steps of the methods described herein, including one or more of the steps of Figs. 4 & 5, may be performed by a server and/or by a client computer in a network-based cloud computing system, in any combination.

Systems, apparatus, and methods described herein may be implemented using a computer program product tangibly embodied in an information carrier, e.g., in a non-transitory machine-readable storage device, for execution by a programmable processor; and the method steps described herein, including one or more of the steps of Figs. 4 & 5, may be implemented using one or more computer programs that are executable by such a processor. A computer program is a set of computer program instructions that can be used, directly or indirectly, in a computer to perform a certain activity or bring about a certain result. A computer program can be written in any form of programming language, including compiled or interpreted languages, and it can be deployed in any form, including as a stand-alone program or as a module, component, subroutine, or other unit suitable for use in a computing environment.

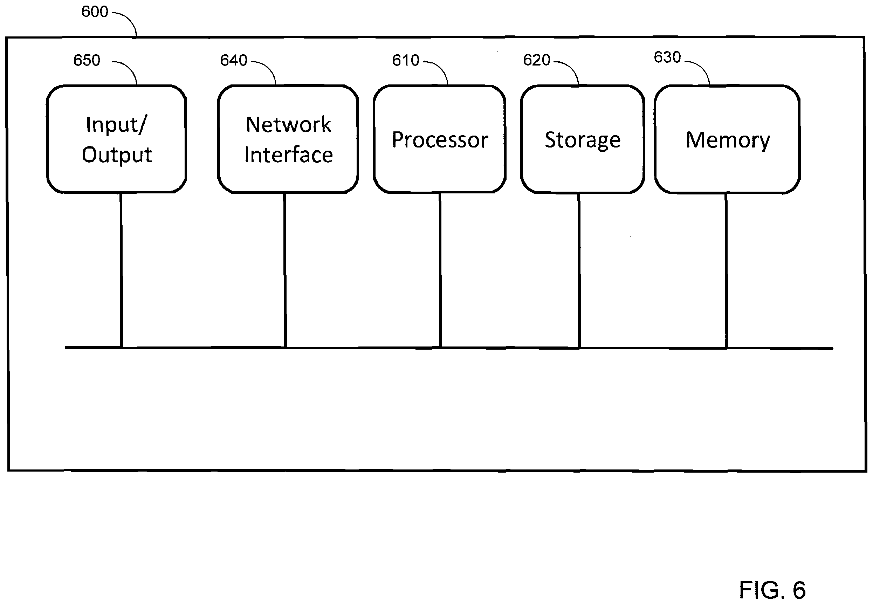

A high-level block diagram of an exemplary computer that may be used to implement systems, apparatus and methods described herein is illustrated in Fig. 6. Computer 600 comprises a processor 610 operatively coupled to a data storage device 620 and a memory 630. Processor 610 controls the overall operation of computer 600 by executing computer program instructions that define such operations. The computer program instructions may be stored in data storage device 620, or other computer readable medium, and loaded into memory 630 when execution of the computer program instructions is desired. Referring to Fig. 1, for example, processing unit 124 may comprise one or more components of computer 600. Thus, the method steps of Figs. 4 & 5 can be defined by the computer program instructions stored in memory 630 and/or data storage device 620 and controlled by processor 610 executing the computer program instructions. For example, the computer program instructions can be implemented as computer executable code programmed by one skilled in the art to perform an algorithm defined by the method steps of Figs. 4 & 5. Accordingly, by executing the computer program instructions, the processor 610 executes an algorithm defined by the method steps of Figs. 4 & 5. Computer 600 also includes one or more network interfaces 640 for communicating with other devices via a network. Computer 600 also includes one or more input/output devices 650 that enable user interaction with computer 600 (e.g., display, keyboard, mouse, speakers, buttons, etc.).

Processor 610 may include both general and special purpose microprocessors, and may be the sole processor or one of multiple processors of computer 600. Processor 610 may comprise one or more central processing units (CPUs), for example. Processor 610, data storage device 620, and/or memory 630 may include, be supplemented by, or incorporated in, one or more application-specific integrated circuits (ASICs), one or more field programmable gate arrays (FPGAs) and/or one or more digital signal processor (DSP) units.

Data storage device 620 and memory 630 each comprise a tangible non-transitory computer readable storage medium. Data storage device 620, and memory 630, may each include high-speed random access memory, such as dynamic random access memory (DRAM), static random access memory (SRAM), double data rate synchronous dynamic random access memory (DDR RAM), or other random access solid state memory devices, and may include non-volatile memory, such as one or more magnetic disk storage devices such as internal hard disks and removable disks, magneto-optical disk storage devices, optical disk storage devices, flash memory devices, semiconductor memory devices, such as erasable programmable read-only memory (EPROM), electrically erasable programmable read-only memory (EEPROM), compact disc read-only memory (CD-ROM), digital versatile disc read-only memory (DVD-ROM) disks, or other non-volatile solid state storage devices.

Input/output devices 650 may include peripherals, such as a printer, scanner, display screen, etc. For example, input/output devices 650 may include a display device such as a cathode ray tube (CRT), plasma or liquid crystal display (LCD) monitor for displaying information to the user, a keyboard, and a pointing device such as a mouse or a trackball by which the user can provide input to computer 600.

Any or all of the systems and apparatus discussed herein, including processing unit 124 and interferogram detection unit 122 may be implemented using a computer such as computer 600.

One skilled in the art will recognize that an implementation of an actual computer or computer system may have other structures and may contain other components as well, and that Fig. 6 is a high level representation of some of the components of such a computer for illustrative purposes.

It is to be understood that the embodiments shown and described herein are only illustrative of the principles of the present invention and that various modifications may be implemented by those skilled in the art without departing from the scope of the invention as defined by the appended claims. Those skilled in the art could implement various other feature combinations without departing from the scope of the invention as defined by the appended claims.

## Claims

1.  An apparatus for obtaining intensity maps from optical coherence tomography interferogram data, the apparatus comprising:

    a light source (102) for generating a beam of light;
    a beam splitter (104) for dividing the beam of light along a sample path (106) and a reference path (108);
    a scanner (116) located along the sample path (106), the scanner (116) for directing the beam of light to a plurality of different locations in the X-Y plane;
    a detector (122) for receiving light returned from each of the sample path (106) and the reference path (108) and generating a plurality of sets of outputs, each of the plurality of sets of outputs representing optical coherence tomography interferogram data and corresponding to light intensities received at different wavelengths of the light source (102) when the beam of light is directed at a particular location in the X-Y plane, the light intensities including information about a light reflectance distribution within an object in a depth direction Z at the particular location in the X-Y plane;
    a memory (630) storing computer program instructions; and
    a processor (610) communicatively coupled to the memory (630), the processor (610) configured to execute the computer program instructions, which, when executed on the processor (610), cause the processor (610) to perform a method comprising:

high-pass filtering a set of outputs generated from directing the beam of light at a particular location in the X-Y plane to generate a set of filtered outputs; and

translating the set of filtered outputs into a single estimated intensity value in the depth direction Z for the particular location in the X-Y plane by calculating an inverse cumulative distribution function for a pre-selected probability to determine a corresponding value of the set of outputs, wherein the plurality of single

estimated intensity values corresponding to the plurality of different locations in the X-Y plane are used for generating a two-dimensional image intensity map of the object.

2. The apparatus of claim 1, wherein the method further comprises translating the set of filtered outputs into a single estimated intensity value for generating a real-time display of a two-dimensional image intensity map of the object.

3. The apparatus of claim 1, wherein the method further comprises presenting the two-dimensional image intensity map of the object at a display.

4. The apparatus of claim 1, wherein at least a part of the two-dimensional image intensity map is used for a scan capture alignment process associated with an imaging modality.

5. The apparatus of claim 1, wherein translating the set of filtered outputs into a single estimated intensity value further comprises:

selecting at least one output of the set of filtered outputs corresponding to at least one selected percentile; and translating the at least one output into the single estimated intensity value.

6. The apparatus of claim 1, wherein the two-dimensional image intensity map is used to register an image obtained via another imaging modality.

7. The apparatus of claim 1, wherein the light source (102) generates a tunable and swept beam of light, and wherein light intensity at different wavelengths of the light source (102) is obtained over time

8. The apparatus of claim 1, wherein the method further comprises down-sampling the set of filtered outputs.

9. The apparatus of claim 1, wherein the method further comprises truncating the set of filtered outputs.

10. The apparatus of claim 1, wherein translating the set of filtered outputs comprises one of measuring and estimating one of a range, deviation, standard deviation, variance and entropy.

11. A method for obtaining intensity maps from optical coherence tomography interferogram data, the method comprising:

generating a beam of light;
dividing the beam of light along a sample path (106) and a reference path (108);
directing the beam of light along the sample path (106) to a plurality of different locations in the X-Y plane;
receiving light returned from each of the sample path (106) and the reference path (108);
generating a plurality of sets of outputs, each of the plurality of sets of outputs representing optical coherence tomography interferogram data and corresponding to light intensities received at different wavelengths of the light source (102) when the beam of light is directed at a particular location in the X-Y plane, the light intensities including information about a light reflectance distribution within an object in a depth direction Z at the particular location in the X-Y plane;
high-pass filtering a set of outputs generated from directing the beam of light at a particular location in the X-Y plane to generate a set of filtered outputs; and translating the set of filtered outputs into a single estimated intensity value in the depth direction Z for the particular location in the X-Y plane by calculating an inverse cumulative distribution function for a pre-selected probability to determine a corresponding value of the set of outputs, wherein the plurality of single estimated intensity values corresponding to the plurality of different locations in the X-Y plane are suitable for generating a two-dimensional image intensity map of the object.

12. The method of claim 11, wherein the method further comprises translating the set of filtered outputs into a single estimated intensity value for generating a real-time display of a two-dimensional image intensity map of the object.

**13.** The apparatus of claim 11, wherein translating the set of filtered outputs into a single estimated intensity value further comprises:

selecting at least one output of the set of filtered outputs corresponding to at least one selected percentile; and translating the at least one output into the single estimated intensity value.

**Patentansprüche**

**1.** Vorrichtung zum Erlangen von Intensitätskarten aus Daten eines Interferogramms optischer Kohärenztomografie, wobei die Vorrichtung umfasst:

eine Lichtquelle (102) zum Erzeugen eines Lichtstrahls;
einen Strahlenteiler (104) zum Teilen des Lichtstrahls entlang einem Abtastgang (106) und einem Referenzgang (108);
einen Scanner (116), der entlang dem Abtastgang (106) angeordnet ist, wobei der Scanner (116) dem Richten des Lichtstrahls auf eine Mehrzahl von unterschiedlichen Stellen in der X-Y-Ebene dient;
einen Detektor (122) zum Empfangen von Licht, das von jedem des Abtastgangs (106) und des Referenzgangs (108) zurückgeworfen wird, und zum Erzeugen einer Mehrzahl von Sätzen von Ausgaben, wobei jeder der Mehrzahl von Sätzen von Ausgaben Daten eines Interferogramms optischer Kohärenztomografie darstellt und Lichtintensitäten entspricht, die bei unterschiedlichen Wellenlängen der Lichtquelle (102) empfangen werden, wenn der Lichtstrahl auf eine spezielle Stelle in der X-Y-Ebene gerichtet wird, wobei die Lichtintensitäten Information über eine Lichtreflexionsverteilung in einem Objekt in eine Tiefenrichtung Z an der speziellen Stelle in der X-Y-Ebene umfassen;
einen Speicher (630), der Computerprogrammanweisungen speichert; und
einen Prozessor (160), der kommunikativ mit dem Speicher (630) gekoppelt ist, wobei der Prozessor (160) dazu ausgelegt ist, die Computerprogrammanweisungen auszuführen, die bei Ausführung auf dem Prozessor (160) bewirken, dass der Prozessor (160) ein Verfahren ausführt, das umfasst:

Hochpassfiltern eines Satzes von Ausgaben, der aus dem Richten des Lichtstrahls auf eine spezielle Stelle in der X-Y-Ebene erzeugt wird, um einen Satz von gefilterten Ausgaben zu erzeugen; und
Übersetzen des Satzes von gefilterten Ausgaben in einen einzelnen geschätzten Intensitätswert in die Tiefenrichtung Z für die spezielle Stelle in der X-Y-Ebene durch Berechnen einer inversen kumulativen Verteilungsfunktion für eine vorausgewählte Wahrscheinlichkeit zur Bestimmung eines entsprechenden Wertes des Satzes von Ausgaben, wobei die Mehrzahl von einzelnen geschätzten Intensitätswerten, die der Mehrzahl von unterschiedlichen Stellen in der X-Y-Ebene entspricht, zum Erzeugen einer zweidimensionalen Bildintensitätskarte des Objektes verwendet wird.

**2.** Vorrichtung nach Anspruch 1, wobei das Verfahren ferner das
Übersetzen des Satzes von gefilterten Ausgaben in einen einzelnen geschätzten Intensitätswert zum Erzeugen einer Echtzeitanzeige einer zweidimensionalen Bildintensitätskarte des Objekts umfasst.

**3.** Vorrichtung nach Anspruch 1, wobei das Verfahren ferner die
Darstellung der zweidimensionalen Bildintensitätskarte des Objekts auf einer Anzeigevorrichtung umfasst.

**4.** Vorrichtung nach Anspruch 1, wobei mindestens ein Teil der zweidimensionalen Bildintensitätskarte des Objekts für einen Abtasterfassungsausrichtungsprozess verwendet wird, der einer Bildgebungsmodalität zugeordnet ist.

**5.** Vorrichtung nach Anspruch 1, wobei das Übersetzen des Satzes von gefilterten Ausgaben in einen einzelnen geschätzten Intensitätswert ferner umfasst: Auswählen von mindestens einer Ausgabe des Satzes von gefilterten Ausgaben, die mindestens einem ausgewählten Perzentil entspricht, und
Übersetzen der mindestens einen Ausgabe in den einzelnen geschätzten Intensitätswert.

**6.** Vorrichtung nach Anspruch 1, wobei die zweidimensionale Bildintensitätskarte
verwendet wird, um ein Bild zu registrieren, das über eine andere Abbildungsmodalität erlangt wird.

**7.** Vorrichtung nach Anspruch 1, wobei die Lichtquelle (102) einen abstimmbaren
und gelenkten Lichtstrahl erzeugt und wobei die Lichtintensität bei verschiedenen Wellenlängen der Lichtquelle (102) im Verlauf von Zeit erlangt wird.

8. Vorrichtung nach Anspruch 1, wobei das Verfahren ferner ein Downsampling des Satzes von gefilterten Ausgaben umfasst.

9. Vorrichtung nach Anspruch 1, wobei das Verfahren ferner das Trunkieren des Satzes von gefilterten Ausgaben umfasst.

10. Vorrichtung nach Anspruch 1, wobei das Übersetzen des Satzes von gefilterten Ausgaben eines von Messen und Schätzen von einem eines Bereichs, einer Abweichung, einer Standardabweichung, einer Varianz und einer Entropie umfasst.

11. Verfahren zum Erlangen von Intensitätskarten aus Daten eines Interferogramms optischer Kohärenztomografie, wobei das Verfahren umfasst:

Erzeugen eines Lichtstrahls;
Teilen des Lichtstrahls entlang einem Abtastgang (106) und einem Referenzgang 108);
Richten des Lichtstrahls entlang dem Abtastgang (106) auf eine Mehrzahl von unterschiedlichen Stellen in der X-Y-Ebene;
Empfangen von Licht, das von jedem des Abtastgangs (106) und des Referenzgangs (108) zurückgeworfen wird, Erzeugen einer Mehrzahl von Sätzen von Ausgaben, wobei jeder der Mehrzahl von Sätzen von Ausgaben Daten eines Interferogramms optischer Kohärenztomografie darstellt und Lichtintensitäten entspricht, die bei unterschiedlichen Wellenlängen der Lichtquelle (102) empfangen werden, wenn der Lichtstrahl auf eine spezielle Stelle in der X-Y-Ebene gerichtet wird, wobei die Lichtintensitäten Information über eine Lichtreflexionsverteilung in einem Objekt in eine Tiefenrichtung Z an der speziellen Stelle in der X-Y-Ebene umfassen;
Hochpassfiltern eines Satzes von Ausgaben, der aus dem Richten des Lichtstrahls auf eine bestimmte Stelle in der X-Y-Ebene erzeugt wird, um einen Satz von gefilterten Ausgaben zu erzeugen; und
Übersetzen des Satzes von gefilterten Ausgaben in einen einzelnen geschätzten Intensitätswert in die Tiefenrichtung Z für die spezielle Stelle in der X-Y-Ebene durch Berechnen einer inversen kumulativen Verteilungsfunktion für eine vorausgewählte Wahrscheinlichkeit zur Bestimmung eines entsprechenden Wertes der Sätze von Ausgaben, wobei die Mehrzahl von einzelnen geschätzten Intensitätswerten, die der Mehrzahl von unterschiedlichen Stellen in der X-Y-Ebene entspricht, zum Erzeugen einer zweidimensionalen Bildintensitätskarte des Objektes geeignet ist.

12. Verfahren nach Anspruch 11, wobei das Verfahren ferner das Übersetzen des Satzes von gefilterten Ausgaben in einen einzelnen geschätzten Intensitätswert zum Erzeugen einer Echtzeitanzeige einer zweidimensionalen Bildintensitätskarte des Objekts umfasst.

13. Verfahren nach Anspruch 11, wobei das Übersetzen des Satzes von gefilterten Ausgaben in einen einzelnen geschätzten Intensitätswert ferner umfasst:

Auswählen von mindestens einer Ausgabe des Satzes von gefilterten Ausgaben, die mindestens einem ausgewählten Perzentil entspricht, und
Übersetzen der mindestens einen Ausgabe in den einzelnen geschätzten Intensitätswert.

**Revendications**

1. Appareil pour obtenir des cartes d'intensité à partir de données d'interférogramme à tomographie par cohérence optique, l'appareil comprenant :

une source de lumière (102) pour générer un faisceau de lumière ;
un diviseur de faisceau (104) pour diviser le faisceau de lumière le long d'un trajet d'échantillon (106) et d'un trajet de référence (108) ;
un dispositif de balayage (116) situé le long du trajet d'échantillon (106), le dispositif de balayage (116) servant à diriger le faisceau de lumière jusqu'à une pluralité d'emplacements différents dans le plan X-Y ;
un détecteur (122) pour recevoir de la lumière revenant de chacun parmi le trajet d'échantillon (106) et le trajet de référence (108) et générer une pluralité d'ensembles de sorties, chacun de la pluralité d'ensembles de sorties représentant des données d'interférogramme à tomographie par cohérence optique et correspondant à des intensités de lumière reçues à différentes longueurs d'onde de la source de lumière (102) lorsque le faisceau de lumière est dirigé sur un emplacement particulier dans le plan X-Y, les intensités de lumière comprenant des informations relatives à une distribution de réflectance de lumière à l'intérieur d'un objet dans une direction de profondeur Z à l'emplacement particulier dans le plan X-Y ;

une mémoire (630) stockant des instructions de programme d'ordinateur ; et

un processeur (610) couplé de manière communicative à la mémoire (630), le processeur (610) étant configuré pour exécuter les instructions de programme d'ordinateur qui, lorsqu'elles sont exécutées sur le processeur (610), amènent le processeur (610) à réaliser un procédé comprenant :

filtrer par un filtre passe-haut un ensemble de sorties générées en dirigeant le faisceau de lumière sur un emplacement particulier dans le plan X-Y pour générer un ensemble de sorties filtrées ; et

traduire l'ensemble de sorties filtrées en une valeur d'intensité estimée individuelle dans la direction de profondeur Z pour l'emplacement particulier dans le plan X-Y en calculant une fonction de distribution cumulative inverse pour une probabilité présélectionnée pour déterminer une valeur correspondante de l'ensemble de sorties, la pluralité de valeurs d'intensité estimées individuelles correspondant à la pluralité d'emplacements différents dans le plan X-Y étant utilisées pour générer une carte d'intensité d'image bidimensionnelle de l'objet.

2. Appareil selon la revendication 1, dans lequel le procédé comprend en outre traduire l'ensemble de sorties filtrées en une valeur d'intensité estimée individuelle pour générer un affichage en temps réel d'une carte d'intensité d'image bidimensionnelle de l'objet.

3. Appareil selon la revendication 1, dans lequel le procédé comprend en outre présenter la carte d'intensité d'image bidimensionnelle de l'objet sur un dispositif d'affichage.

4. Appareil selon la revendication 1, dans lequel au moins une partie de la carte d'intensité d'image bidimensionnelle est utilisée pour un traitement d'alignement de capture par balayage associé à une modalité d'imagerie.

5. Appareil selon la revendication 1, dans lequel traduire l'ensemble de sorties filtrées en une valeur d'intensité estimée individuelle comprend en outre :

sélectionner au moins une sortie parmi l'ensemble de sorties filtrées correspondant à au moins un percentile sélectionné ; et

traduire l'au moins une sortie en la valeur d'intensité estimée individuelle.

6. Appareil selon la revendication 1, dans lequel la carte d'intensité d'image bidimensionnelle est utilisée pour caler une image obtenue par l'intermédiaire d'une autre modalité d'imagerie.

7. Appareil selon la revendication 1, dans lequel la source de lumière (102) génère un faisceau de lumière accordable et balayé, et une intensité de lumière à différentes longueurs d'onde de la source de lumière (102) est obtenue au fil du temps.

8. Appareil selon la revendication 1, dans lequel le procédé comprend en outre sous-échantillonner l'ensemble de sorties filtrées.

9. Appareil selon la revendication 1, dans lequel le procédé comprend en outre tronquer l'ensemble de sorties filtrées.

10. Appareil selon la revendication 1, dans lequel traduire l'ensemble de sorties filtrées comprend l'un parmi mesurer et estimer l'un parmi une plage, un écart, un écart-type, une variation et une entropie.

11. Procédé pour obtenir des cartes d'intensité à partir de données d'interférogramme à tomographie par cohérence optique, le procédé comprenant :

générer un faisceau de lumière ;

diviser le faisceau de lumière le long d'un trajet d'échantillon (106) et d'un trajet de référence (108) ;

diriger le faisceau de lumière le long du trajet d'échantillon (106) jusqu'à une pluralité d'emplacements différents dans le plan X-Y ;

recevoir de la lumière revenant de chacun parmi le trajet d'échantillon (106) et le trajet de référence (108) ;

générer une pluralité d'ensembles de sorties, chacun de la pluralité d'ensembles de sorties représentant des données d'interférogramme à tomographie par cohérence optique et correspondant à des intensités de lumière reçues à différentes longueurs d'onde de la source de lumière (102) lorsque le faisceau de lumière est dirigé sur un emplacement particulier dans le plan X-Y, les intensités de lumière comprenant des informations relatives à une distribution de réflectance de lumière à l'intérieur d'un objet dans une direction de profondeur Z à l'emplacement particulier dans le plan X-Y ;

filtrer par un filtre passe-haut un ensemble de sorties généré en dirigeant le faisceau de lumière sur un emplacement particulier dans le plan X-Y pour générer un ensemble de sorties filtrées ; et

traduire l'ensemble de sorties filtrées en une valeur d'intensité estimée individuelle dans la direction de profondeur Z pour l'emplacement particulier dans le plan X-Y en calculant une fonction de distribution cumulative inverse pour une probabilité présélectionnée pour déterminer une valeur correspondante de l'ensemble de sorties, la pluralité de valeurs d'intensité estimées individuelles correspondant à la pluralité d'emplacements différents dans le plan X-Y étant appropriée pour générer une carte d'intensité d'image bidimensionnelle de l'objet.

12. Procédé selon la revendication 11, dans lequel le procédé comprend en outre traduire l'ensemble de sorties filtrées en une valeur d'intensité estimée individuelle pour générer un affichage en temps réel d'une carte d'intensité d'image bidimensionnelle de l'objet.

13. Appareil selon la revendication 11, dans lequel traduire l'ensemble de sorties filtrées en une valeur d'intensité estimée individuelle comprend en outre :

sélectionner au moins une sortie parmi l'ensemble de sorties filtrées correspondant à au moins un percentile sélectionné ; et

traduire l'au moins une sortie en la valeur d'intensité estimée individuelle.

FIG. 1

EP 2 784 438 B1

```
                    200
          ┌─────────────────────┐
          │   Fourier Domain     │
          │  OCT Interferogram   │
          │     Data (3D)        │
          └─────────────────────┘
               │              │
    202        ▼         206  ▼
  ┌─────────────────┐   ┌─────────────────┐
  │  Generate 2-D   │   │  OCT 3-D Image  │
  │  Intensity Map  │   │   Conversion    │
  └─────────────────┘   └─────────────────┘
         │                     │
   204   ▼              208    ▼
  ┌─────────────────┐   ┌─────────────────┐
  │ Display Intensity│   │   OCT Cross-    │
  │       Map        │   │ Sectional Images│
  └─────────────────┘   └─────────────────┘
```

FIG. 2

FIG. 3

For each A-line:

Interferogram Data  *300*

302 — High Pass Filter Data

304 — Down-sample or Truncate Filtered Data

306 — Square or Absolute Value

308 — Sort Results or Select Quantile

310 — Inverse CDF Calculation

312 — Single Estimated Intensity Value

314 — Square or Absolute Value

316 — Select Max Value

318 — Select Min and Max Values

320 — Square or Absolute Value

322 — Combine

EP 2 784 438 B1

```
                    ┌─────────────────────────┐
                    │          Start          │
                    └─────────────────────────┘
                                 │
                                 ▼
                    ┌─────────────────────────┐      402
                    │   Generate and Divide   │
                    │   Light Along Sample    │
                    │      Path and           │
                    │    Reference Path       │
                    └─────────────────────────┘
                                 │
                                 ▼
                    ┌─────────────────────────┐      404
                    │  Direct Light Along     │
                    │  Sample Path to         │
                    │  Different X-Y Plane    │
                    │      Locations          │
                    └─────────────────────────┘
                                 │
                                 ▼
                    ┌─────────────────────────┐      406
                    │    Receive Light at     │
                    │ Interferogram Detection │
                    │          Unit           │
                    └─────────────────────────┘
                                 │
                                 ▼
                    ┌─────────────────────────┐      408
                    │  Generate Plurality of  │
                    │      Sets of Outputs    │
                    └─────────────────────────┘
                                 │
                                 ▼
                    ┌─────────────────────────┐      410
                    │  High-Pass Filter       │
                    │  Outputs to generate    │
                    │    Filtered Outputs     │
                    └─────────────────────────┘
                                 │
                                 ▼
                    ┌─────────────────────────┐      412
                    │ Translate Filtered      │
                    │ Outputs to Single       │
                    │ Estimated Intensity     │
                    │        Value            │
                    └─────────────────────────┘
                                 │
                                 ▼
                    ┌─────────────────────────┐      414
                    │   Generate 2-D image    │
                    │     intensity map       │
                    └─────────────────────────┘
```

400

FIG. 4

FIG. 5

EP 2 784 438 B1

FIG. 6

EP 2 784 438 B1

**EP 2 784 438 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8319974 B2